# EUROPEAN PATENT SPECIFICATION

(11) **EP 3 811 590 B1**
(45) Date of publication and mention of the grant of the patent: **11.03.2026**
(21) Application number: 19823405.6
(22) Date of filing: 20.06.2019
(51) Int. Cl.: H04L 12/46, H04L 61/103, H04L 69/16, H04L 101/37, H04L 9/40

(54) **SYSTEM AND METHOD FOR CREATING A SECURE HYBRID OVERLAY NETWORK**
SYSTEM UND VERFAHREN ZUR ERZEUGUNG EINES SICHEREN HYBRIDEN ÜBERLAGERUNGSNETZES
SYSTÈME ET PROCÉDÉ DE CRÉATION D'UN RÉSEAU SUPERPOSÉ HYBRIDE SÉCURISÉ

(30) Priority: 21.06.2018 US 201862688294 P
(43) Date of publication of application: 28.04.2021
(73) Proprietor: VMware LLC, Palo Alto, CA 94304 (US)
(72) Inventor: RUPPIN, Adi, Los Altos, California 94024 (US); RAVE, Elad, Los Altos, California 94024 (US)
(74) Representative: Dilg, Haeusler, Schindelmann Patentanwaltsgesellschaft mbH
(86) International application number: PCT/US2019/038114
(87) International publication number: WO 2019/246331

(56) References cited:
- WO-A1-2010/105107
- CN-A- 103 168 456
- US-A1- 2010 154 050
- US-A1- 2017 230 180
- US-B2- 8 130 671
- US-B2- 8 942 238

## Description

### FIELD

The present disclosure relates to the field of network security and connectivity and, more particularly, relates to establishing an overlay network on top of the public Internet that aims to securely and efficiently permit communication for any plurality of computing devices.

### BACKGROUND

The Internet was never built for today's modern enterprise requirements, and consequently the vast majority of cybersecurity and networking tools attempt to address the symptoms and not the core design flaws of the underlying network. With the increasingly decentralized enterprise, the perimeter has disappeared and a new paradigm is required to connect and protect disparate users and services, whereby the network is architected for security and performance from the ground up.

In the cited art, US2010154050A1 concerns an identity-driven peer-to-peer (P2P) virtual private network (VPN), wherein first and second principals authenticate to a trusted third party. The first principal subsequently requests a P2P VPN with the second principal. The second principal is contacted on behalf of the first principal and permission is acquired. The first and second principals are then sent commands to directly establish a P2P VPN communication session with one another.

### BRIEF SUMMARY

The present invention is defined according to the independent claims. Additional features will be appreciated from the dependent claims and the description herein. Any examples which are described but which do not fall within the scope of the claims are to be interpreted merely as being useful for a better understanding of the invention.

By way of introduction, the present disclosure concerns a system and method for supporting secure communication for a plurality of computational devices, for example as an overlay to an existing computer network, such as the Internet, for example.

Unless otherwise defined, all technical and scientific terms used herein have the same meaning as commonly understood by one of ordinary skill in the art. The materials, methods, and examples provided herein are illustrative only and not intended to be limiting.

Implementation of the apparatuses, devices, methods, and systems of the present disclosure involve performing or completing certain selected tasks or steps manually, automatically, or a combination thereof. Specifically, several selected steps can be implemented by hardware or by software on an operating system, of a firmware, and/or a combination thereof. For example, as hardware, selected steps can be implemented as a chip or circuit (e.g., ASIC). As software, selected steps can be implemented as a number of software instructions being executed by a computer (e.g., a processor of the computer) using an operating system. In any case, selected steps of methods of at least some examples can be described as being performed by a processor, such as a computing platform for executing a plurality of instructions.

Software (e.g., an application, computer instructions) which is configured to perform (or cause to be performed) certain functionality may also be referred to as a "module" for performing that functionality, and also may be referred to a "processor" for performing such functionality. Thus, the processor, according to some examples, may be a hardware component, or, according to some examples, a software component.

Further to this end, in some examples: a processor may also be referred to as a module; in some examples, a processor may comprise one more modules; in some examples, a module may comprise computer instructions - which can be a set of instructions, an application, software - which are operable on a computational device (e.g., a processor) to cause the computational device to conduct and/or achieve one or more specific functionality. Thus, for some examples, the noted feature/functionality can be described/claimed in a number of ways (e.g., computational device, processor, module, software, application, computer instructions, and the like).

Some examples are described with regard to a "computer", a "computer network," and/or a "computer operational on a computer network," it is noted that any device featuring a processor (which may be referred to as "data processor"; "preprocessor" may also be referred to as "processor") and the ability to execute one or more instructions may be described as a computer, a computational device, and a processor (e.g., see above), including but not limited to a personal computer (PC), a server, a cellular telephone, an IP telephone, a smart phone, a PDA (personal digital assistant), a thin client, a mobile communication device, a smart watch, head mounted display or other wearable that is able to communicate externally, a virtual or cloud based processor, a pager, and/or a similar device. Two or more of such devices in communication with each other may be a "computer network."

### BRIEF DESCRIPTION OF THE DRAWINGS

The present disclosure will be understood more fully from the detailed description given below and from the accompanying drawings, in which:
**Figure 1** is a diagram of the system's controller.
**Figure 2** is a diagram of the system's broker.
**Figure** 3 is a diagram of a standard edge node.
**Figure 4** is a diagram of a headless edge node.
**Figure 5** is a diagram of a clientless edge node.
**Figure 6** is a diagram of a gateway edge node.
**Figure 7** is a diagram of a policy object.
**Figure 8** is a diagram of a context object.
**Figure 9** is a network diagram of a secure overlay network acting as a control plane.
**Figure 10** is a flow diagram of how the overlay network components interact when it is acting as a control plane.
**Figure 11** is a network diagram of a secure overlay network acting as both a control and data plane.
**Figure 12** is a flow diagram of how the overlay network components interact when it is acting as both a control and data plane.
**Figure 13** is a network diagram of a secure overlay network acting interchangeably as a control plane and a control and data plane.
**Figure 14** is a flow diagram of how the overlay network components interact when it is acting interchangeably as a control plane and a control and data plane.
**Figure 15** illustrates an extensible system of network-based services.
**Figure 16** is a flow diagram of how the overlay network components interact when being extended with network-based services.
**Figure 17** illustrates an overlay network enforcing policy restrictions.
**Figure 18** is a block diagram of an initial workflow for connecting to the overlay network.
**Figure 19** is a block diagram of a packet comprising a secure tunnel.
**Figure 20** is a block diagram of a computer system.

### DETAILED DESCRIPTION

The following description concerns a system and method for creating a secure overlay network on top of the public Internet. Unlike the public Internet, the overlay network is built from the ground up for simplicity, security and performance and therefore does not require the deployment of numerous networking and cybersecurity solutions. Without wishing to be limited by a closed list, this is enhanced through the overlay network's following unique design attributes: creating an identity-based network in which user identities are the identifiers rather than IP addresses, and whereas only authenticated and authorized users whose identity has been established have visibility and access to the network; establishing fully encrypted and private network segments; providing superior performance through improved protocols and routing; and implementing a decentralized topology that allows any two nodes on it to communicate regardless of each node's location or network settings - as if the two nodes are on the same local area network.

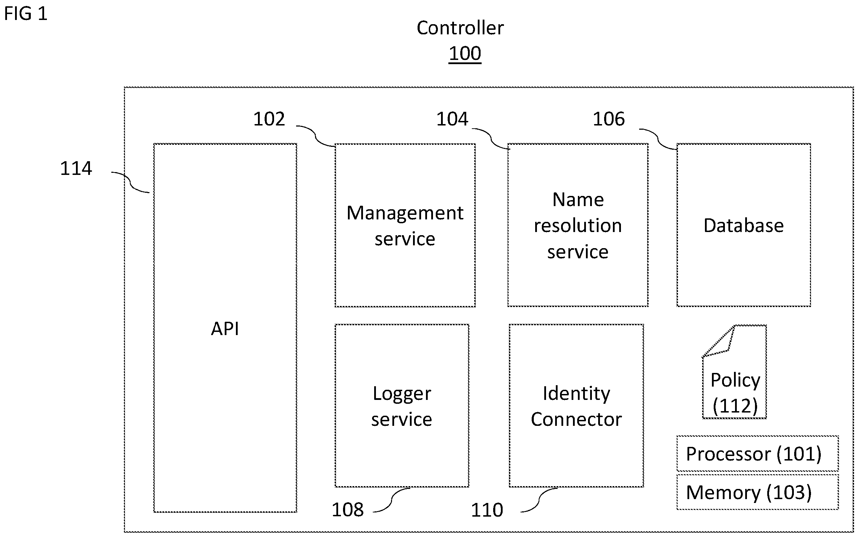

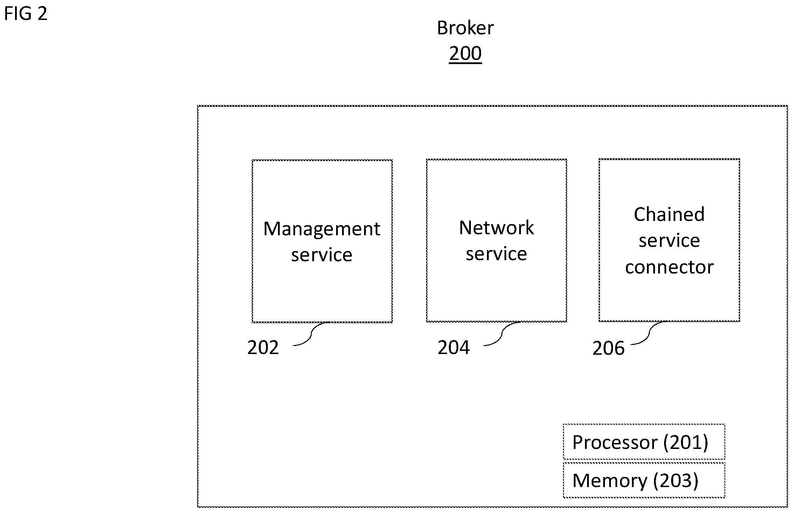

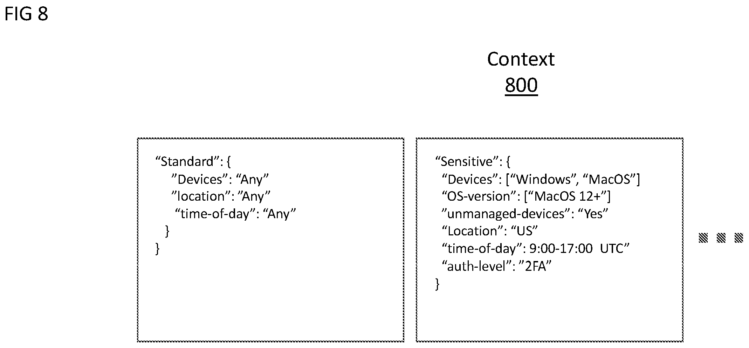

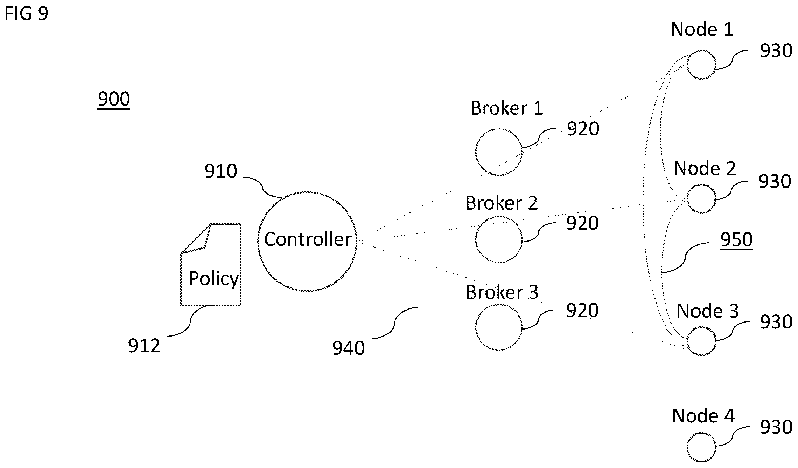

**Figures 1-7** are diagrams of some examples of the principal individual system components, followed by diagrams describing their principal settings in Figures 8-9, and by a description of the components' interactions in Figures 9-17. To begin, **Figure 1** is a diagram of one example of the controller 100, responsible for management of one or more overlay networks along with all network components as described in figures 2-7, user authentication and authorization, and mapping of the network's nodes and their unique identifiers on the overlay network into the IP addresses of the underlying. The controller may be further comprised of one or more physical servers, virtual machines, microservices or serverless instances. In one example as shown, controller 100 features a processor 101 and a memory 103, which may be a plurality of such processors and memories (not shown). As used herein, a processor such as processor 101 generally refers to a device or combination of devices having circuitry used for implementing the communication and/or logic functions of a particular system. For example, a processor may include a digital signal processor device, a microprocessor device, and various analog-to-digital converters, digital-to-analog converters, and other support circuits and/or combinations of the foregoing. Control and signal processing functions of the system are allocated between these processing devices according to their respective capabilities. The processor may further include functionality to operate one or more software programs based on computer-executable program code thereof, which may be stored in a memory, such as memory 103. As the phrase is used herein, the processor may be "configured to" perform a certain function in a variety of ways, including, for example, by having one or more general-purpose circuits perform the function by executing particular computer-executable program code embodied in computer-readable medium, and/or by having one or more application-specific circuits perform the function.

For example, memory 103 may store information related to the presence of all other system components as described hereinbelow, and instructions and policy 112 information related to responding to network requests based on said policy.

In this example, processor 101 is configured to perform a defined set of basic operations in response to receiving a corresponding basic response to receiving a corresponding basic instruction selected from a defined native instruction set of codes. The native instruction set of codes may be determined for example according to the operating system of controller 100. This set of machine codes selected from the native instruction set may relate to processing of inbound network requests from all system components, determining responses to such incoming requests, and sending responses to system components in accordance with the policy.

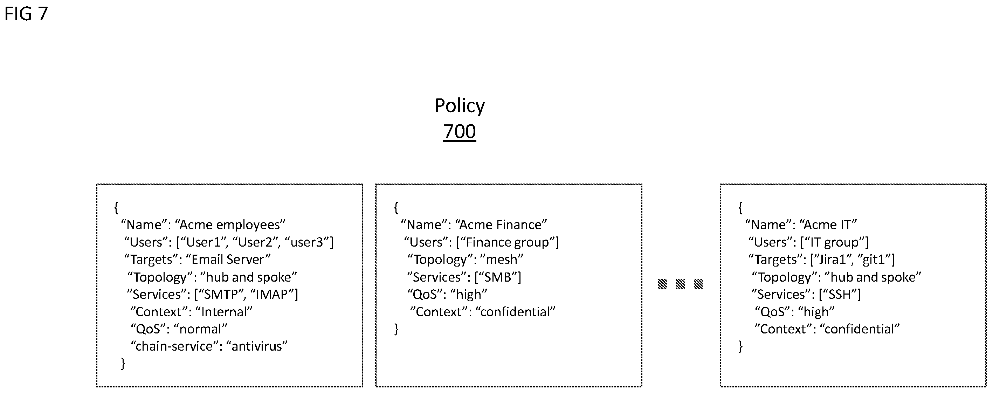

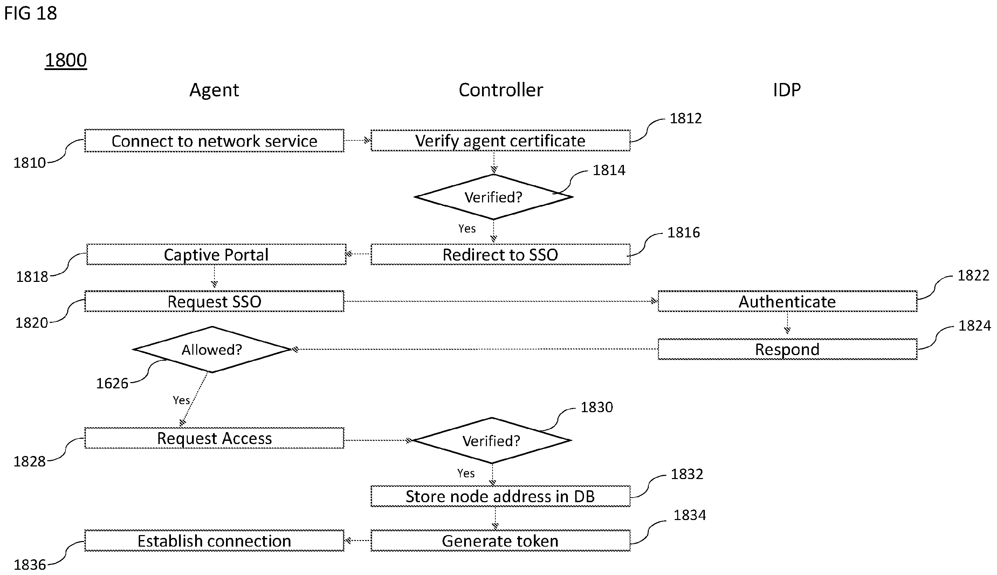

Components of controller 100 include a distributed management service 102 responsible for communicating and controlling all the system's components, a name resolution service 104 that maintains a mapping between the Internet's underlying IP addresses to the overlay network's unique identifiers as will be elaborated in figure 18, a database service 106 storing all settings data associated with all system components, a logging service 108 responsible for collecting logs from all distributed system components, a user identity connector service 110 connected to third party identity providers responsible for authenticating and authorizing users onto the network, and a set of APIs 114. A policy object 112 is associated with the controller and resides in database 106. The policy, as can be implemented as described in figure 7 hereinbelow as an example, determines settings such as network topology, network access permissions, and contextual access rules.

In some examples, the controller's name resolution service 104 is distributed or decentralized and comprises two or more physical servers, virtual machines, microservices or serverless instances. The name resolution service may be comprised of an industry standard distributed database, such as MongoDB, or a managed cloud database, such as Google Spanner. Alternatively, it may leverage industry standard DNS hierarchical architecture to maintain a distributed service. In some examples, the name resolution service may utilize a Blockchain repository such as Ethereum.

In some examples, the database service 106 is distributed or decentralized and comprises two or more physical servers, virtual machines, microservices or serverless instances. The database service may be comprised of an industry standard distributed database, such as MongoDB, or a managed cloud database, such as Google Spanner.

In some examples, components 102, 108, 110, and 114 are also distributed, each comprising two or more physical servers, virtual machines, microservices or serverless instances.

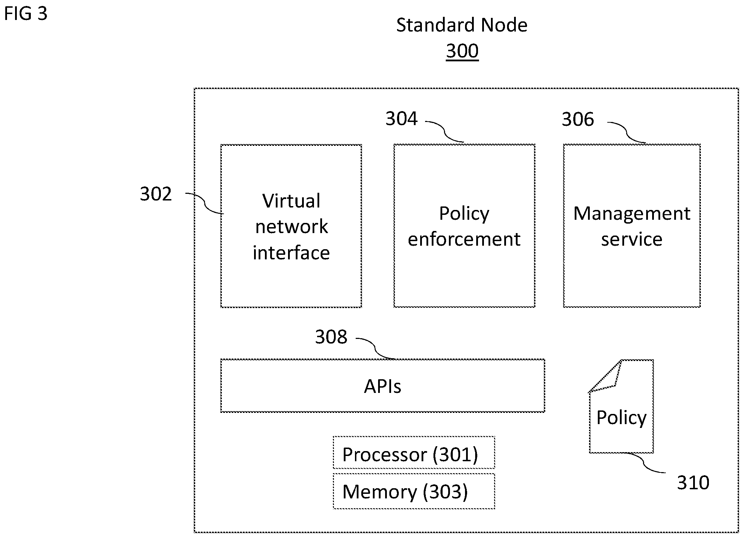

**Figure 2** is a diagram of one example of broker 200, responsible for relaying network traffic originating from nodes described in figures 3-7 when applicable to overcome connectivity issues, accelerate network performance, or provide additional security and networking services as will be elaborated later. The communication broker may be further comprised of one or more physical servers, virtual machines, microservices or serverless instances. Optionally broker 200 comprises a processor 201 and a memory 203, which may operate as previously described.

For example, memory 203 may store information related to configuration of the allowed connection between any two network nodes as described hereinbelow.

In this non-limiting example, processor 201 is configured to perform a defined set of basic operations in response to receiving a corresponding basic response to receiving a corresponding basic instruction selected from a defined native instruction set of codes. The native instruction set of codes may be determined for example according to the operating system of broker 200. This set of machine codes selected from the native instruction set may relate to processing of network traffic from network nodes, and forwarding said traffic to other network nodes in accordance with the configuration hereinabove.

The broker software comprises a management service 202 that communicates with the controller described hereinabove, a network service 204 that implements a reverse network proxy that relays traffic originating from nodes described in figures 3-7 herein, and a chained service connector 206, allowing chaining additional proxies and relaying traffic through them.

The following figures 3-6 describe the overlay network's end nodes. The overlay network's main function is to facilitates connection of such nodes together securely and efficiently in accordance with the policy and settings managed by the controller shown in figure 1 hereinabove.

**Figure 3** is a diagram of one example of the network's edge node 300. An edge node may comprise an end user's computer, a mobile device or any suitable computational device as described herein. The edge node further comprises a virtual network interface 302, which in one example is a TAP device capturing some or all of the network traffic going to and from the edge node, a policy enforcement module 304 which enforces rules over traffic traversing the virtual network interface in accordance with policy object 310 derived from the central policy object held by the controller as described hereinabove, a management service 306 responsible for communications with same controller, and a set of APIs.

Optionally edge node 300 comprises a processor 301 and a memory 303, which may operate as previously described. For example, memory 303 may store instructions related to operation of policy enforcement module 304, which are then executed by processor 301. Policy object 310 may be received from controller 100, for example as a set of rules that policy enforcement module 304 then applies to communications sent from and received by edge node 300. Receiving policy object 310 from controller 100 gives centralized control within the system for policy determination and enforcement.

In this example, processor 301 is configured to perform a defined set of basic operations in response to receiving a corresponding basic instruction selected from a defined native instruction set of codes. The native instruction set of codes may be determined for example according to the operating system of edge node 300. Memory 303 preferably stores several sets of machine codes, including a first set of machine codes selected from the native instruction set for executing policy enforcement, for example as embodied by policy enforcement module 304. A second set of machine codes selected from the native instruction set may relate to analysis of incoming network traffic, to determine whether such incoming traffic is in accordance with the policy. A third set of machine codes selected from the native instruction set may relate to analysis of outgoing data, instructions and so forth from edge node 300, to determine whether such outgoing data, instructions and so forth are in accordance with the policy.

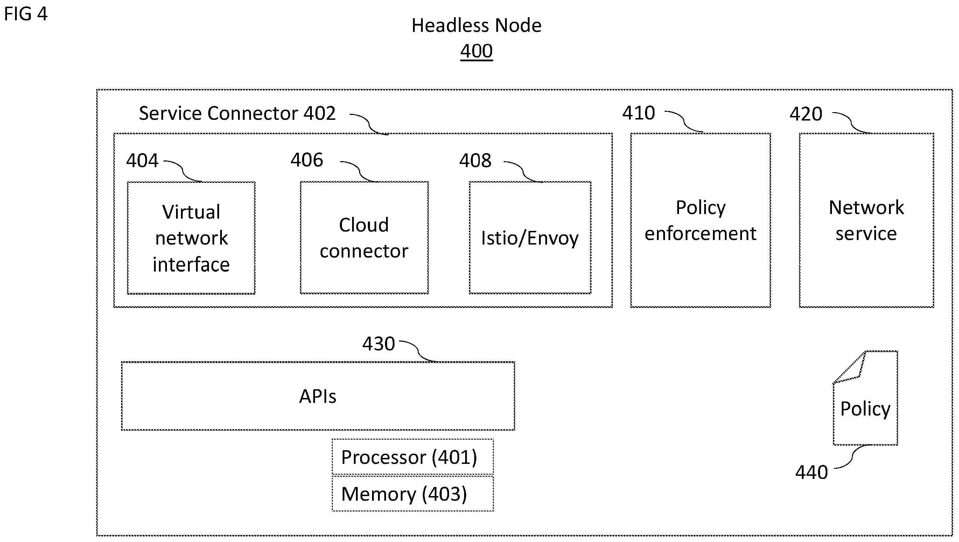

**Figure 4** is a diagram of one example of the network's headless edge node 400. The headless node may be a physical or virtual server machine, microservice or serverless instance. A headless node does not require interactive user authentication as will be described herein and may be used for example for connecting server-side computing devices such as listed hereinabove. The headless node further comprises a service connector 402 connecting it to a server or service instance, which may comprise a virtual network interface 404, a cloud connector 406 plugging into an Amazon VPC or similar cloud connectors using standard method provided by the public cloud providers, or an Istio or Envoy based proxy 408. The headless node further comprises a policy enforcement module 410 which applies rules over traffic traversing the network interface in accordance with policy object 440 derived from the central policy object held by the controller as described hereinabove, a network service 420 allowing it to be managed by the controller, and a set of APIs 433.

Optionally headless edge node 400 comprises a processor 401 and a memory 403, which may operate as previously described.

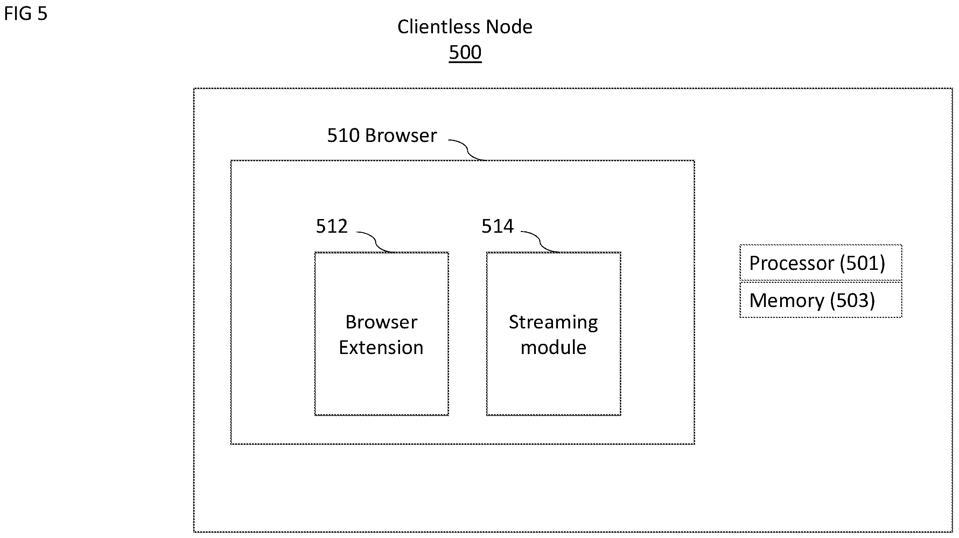

**Figure 5** is a diagram of one example of the network's clientless node 500. The clientless node may be any end user computing device or any other suitable computational device. The edge node further comprises a browser 510. The browser comprises a browser extension 512 (such as a Chrome extension or Web Assembly Plugin) that communicates with the controller and a second node, or a streaming module 514 capturing and displaying a second node interface using protocols such as ICA, HDX, or similar protocols.

Preferably, clientless node 500 comprises a processor 501 and a memory 503, which may operate as previously described. For example, processor 501 and memory 503 may respectively store and process instructions related to execution of the browser and the browser extension 512 and/or the streaming module 514, which result in a network connection being made to a second node in accordance with the policy or set of rules received from the controller, and the transfer of data from the second node to the client node 500.

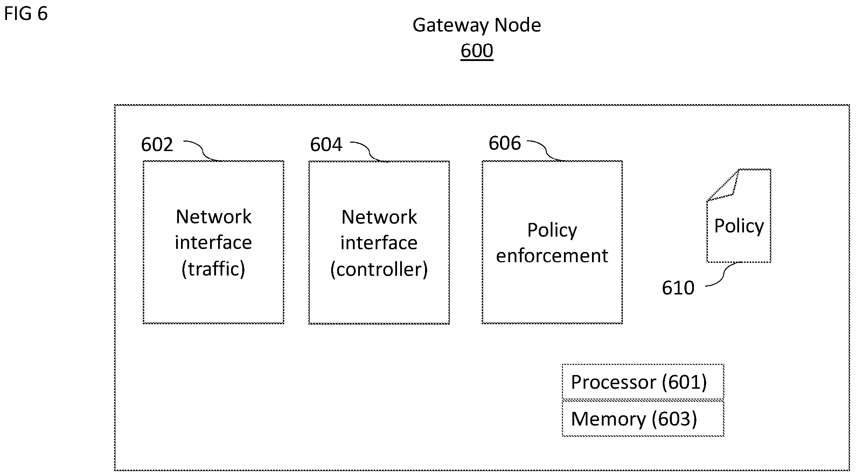

**Figure 6** is a diagram of one example of the network's gateway edge node 600. A gateway edge node may a physical or virtual gateway device, coupled to a computing device, a computer network, or one or more IoT devices. In one example, the computing devices or computer network may be coupled to the gateway via a local area network. In one example, the computing devices or computer network may be coupled with the gateway node via a wireless connection, such as a cellular telephone connection, wireless fidelity connection, etc.

The gateway node 600 further comprises a network interface 602 capturing inbound and outbound traffic from the network connected on one side of the gateway, a network interface 604 for communicating with the controller, and a policy enforcement module 606 which enforces rules over traffic traversing the network interface in accordance with policy object 610 derived from the central policy object held by the controller as described hereinabove.

Gateway node 600 also preferably comprises a processor 601 and a memory 603, which may operate as previously described. For example, the instructions for the execution of policy enforcement module 606 may be stored in memory 603 and executed by processor 601, for example as previously described.

**Figure 7** is a diagram of one example of the overlay network's policy 700. The policy is maintained by the controller and includes a list the relationships between user identities, devices and services, along with restrictions, and actions.

An exemplary system as considered herein may comprise one or more overlay networks. The operation of network traffic may be controlled according to a policy 702, which may be the same or different for each such overlay network. Policy 702 preferably comprises the network's settings, including the network topology which determines if a connection is allowed between any two nodes and in what direction. Policy 702 may also determine the identity of the permitted network participants comprising of a list of users, groups and other device identifiers. Within the context of permitted participants, further restrictions may be added, including but not limited to network access permissions, allowed and disallowed network services, desired quality of service, desired node posture (such as may be obtained from an endpoint security agent), any additional services that may be chained to the network, including antivirus, data loss prevention and other services, and contextual access rules as may be implemented in accordance with figure 8 hereinbelow as an example. For example, the policy may dictate a number of edge nodes associated with a group of users can connect to a headless server node and restricted to an FTP service, thereby facilitating an FTP site only accessible to said nodes,

**Figure 8** is a diagram of one example of a context object 800 that may be associated with one or more policies. Context object 800 preferably determines contextual network access rules, including what types of devices may access the network, such as Window OS, MacOS, iOS, Linux, Android, or other operating systems, whether unmanaged devices (devices that are not corporate managed) are allowed onto the network, what minimal operating system versions are allowed, in what hours of the day is a connection allowed, what geo-locations are users allowed to connect from, what device posture is required (for example, the connecting device may need to have an up-to-date antivirus) and what authentication level is required (simple, two-factor, re-authentication).

The following figures 9-17 describe the interactions between the components in figures 1-6 hereinafter referenced as a block, as determined according to settings shown in figures 7-8.

The following figures 9-16 comprise several key overlay network configurations and corresponding flow chart diagrams,

**Figure 9** is a network diagram of one example of a secure overlay network. In one example, the overlay network 900 allows direct connection among nodes that represent multiple disparate computing devices, such as laptops, desktops, servers, smartphones, tablets, IoT devices, etc.

In one example, the overlay network 900 includes a controller 910 and a policy associated with it 912, one or more brokers 920, as well as one or more computing devices 930 implementing nodes associated with one or more users. In one example, the controller 910 and brokers 920 are server computer systems, while the nodes 930 are server computer systems, desktops or laptop computers, mobile devices such as smartphones and tablets, web browsers, or IoT devices.

The controller 910 and computing devices 930 may be coupled to a logical network 940 that communicates using any of the standard protocols for the secure exchange of information. In one example, one or more computing devices may be coupled with the network via a wireless connection, such as a cellular telephone connection, wireless fidelity connection, etc. The computing devices and controller may run on one Local Area Network (LAN) and may be incorporated into the same physical or logical system, or different physical or logical systems. Alternatively, the computing devices and controller may reside on different LANs, wide area networks, cellular telephone networks, etc. that may be coupled together via the Internet but separated by firewalls, routers, and/or other network devices. It should be noted that various other network configurations can be used including, for example, hosted configurations, distributed configurations, centralized configurations, etc.

In some examples, some or all of the nodes 930 may be connected over a network tunnel 950 as per policy 912. Such a tunnel may use standard VPN protocols such as IPSEC or PPTP, SSL/TLS, or proprietary TCP, UDP, or IP-based protocols. For such an example, any two nodes not connected via the tunnel 950 are not considered to be on the same overlay network and are not mutually visible.

In some examples, all communications of computing devices 930 are encrypted, with the original payload encrypted using industry-standard encryption, such as AES-256. In some examples, encryption keys for each pair of computing devices 930 are determined by controller 910 and communicated to the individual nodes. In some examples, any two nodes use standard key exchange methods, such as public key encryption or Diffie Hellman. Alternatively, the system uses Identity-Based Encryption (IBE) to determine the key Kij for each nodes i and j, while the controller acts as the Private Key Generator (PKG).

In some examples, the underlying protocol for the tunnel is an IP or UDP-based protocol that provides reduced latency compared to TCP, advanced congestion control such as TCP BBR, allows multiplexed streams, and forward error correction such as Google's QUIC.

In some examples, policy 912 is downloaded from the controller and cached on the node for a configurable period of time determined by the controller. The policy downloaded by the node includes a subset of the controller policy as may be implemented in accordance with figure 1 hereinabove as an example that applies to each node 930. In some examples, the policy dictates which nodes 930 may be connected and in what direction, and what restrictions apply to such connections as may be implemented in accordance with figure 7 hereinabove as an example. For example, the policy may determine that nodes 930 may only communicate through tunnels 950. Furthermore, the policy may determine that only nodes 930 connected through tunnels 950 are mutually visible. However, in this current example the policy does not permit brokers 920 to relay network traffic originating from nodes 930.

In some examples, the tunnels 950 are transient and are only established when a first node initiates authorized communication with a second node.

The controller 910 may be implemented in accordance with figure 1 hereinabove as an example.

The broker 920 may be implemented in accordance with figure 2 hereinabove as an example.

The nodes 930 may be implemented in accordance with figure 3-6 hereinabove as an example.

The policy 912 may be implemented in accordance with figure 7 hereinabove as an example.

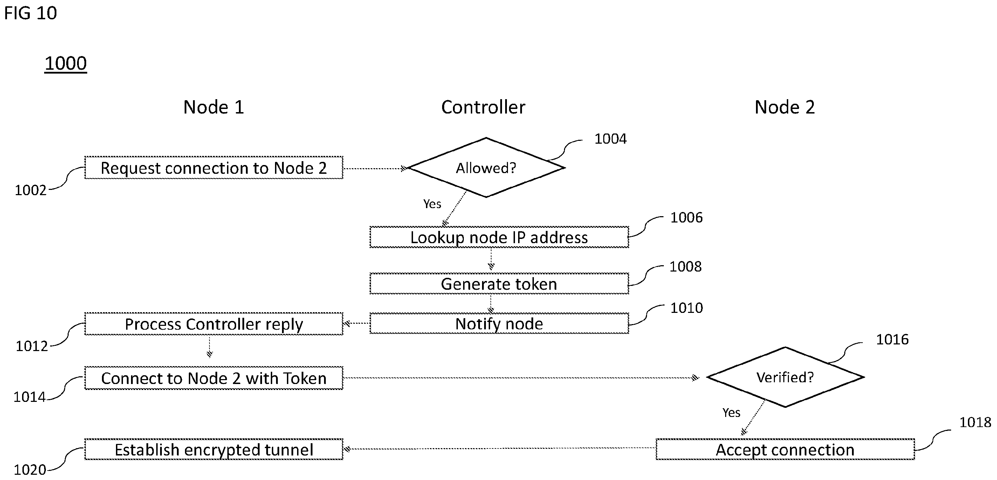

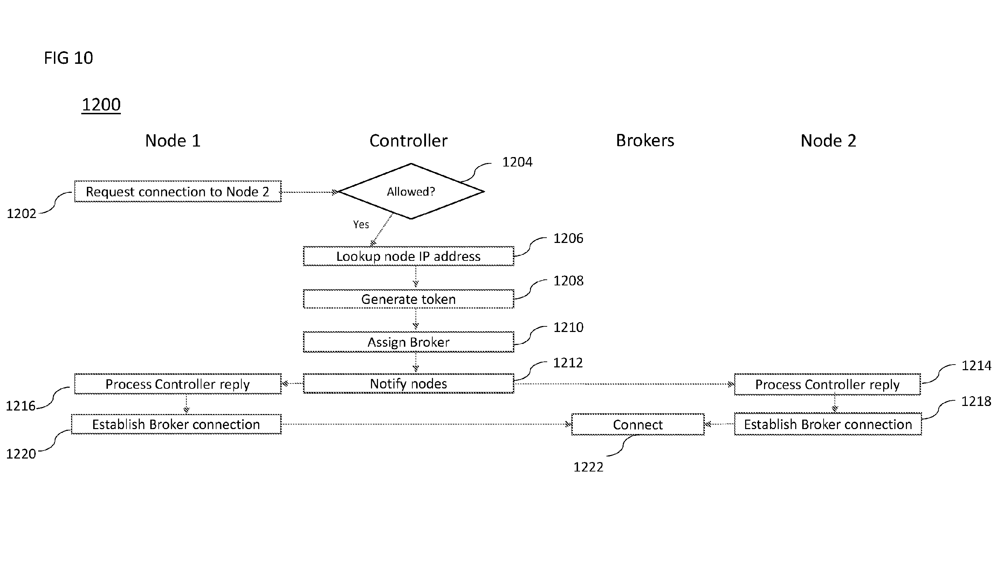

**Figure 10** is a flow chart showing the interaction between the different components of the overlay network referenced in figure 9 hereinabove.

In one example, an initial connection between a first node wishing to connect to a second node over the overlay network compromises of the following steps: a first node sends a request to the controller to connect to a second node 1002. The controller may utilize its management service module to receive such connection request from the first node as shown in figure 1 hereinabove, as an example; The controller checks the identifiers of the first and second nodes (e.g. "user1 @acme.com", user2@acme.com, or other suitable identifiers of the nodes) against the policy and connection is only allowed if and only if the policy allows it in 1004. If a connection is not allowed the controller rejects the request and no connection is established.

If the connection is approved, the controller resolves the IP address associated with the second node based on its identifier sent by the first node 1006, such lookup may be performed by the controller's name resolution service as implemented in accordance with figure 1 as an example; the controller generates a cryptographically signed token for the connection 1008; the controller transmits the IP address and token to the first node 1010; the first node processes the response from controller 1012; the first node initiates a connection to the second node and passes the token 1014; the second node validates the token 1016; if valid, the connection is accepted 1018; the first node then establishes a secure tunnel to the second node 1020.

In some examples, an initial deployment of client-side certificates or keys is performed by the controller. These certificates or keys are used according to industry standards in establishing the tunnels using TLS, Diffie-Hellman or other key exchange algorithms at the establishment of the connection between the network nodes to ensure the authenticity of both parties.

In some examples, each node may send logging information back to the controller. Log information may be configurable by policy and include connection times, destinations, status, and performance data. The logging information may be formatted as Syslog, Common Event Format (CEF) or other textual or binary formats. For capturing logs the controller may implement its logger service as shown in figure 1 as an example. The logger service processes communication in the formats hereinabove and stores some or all of the data into a database. In some examples, the controller logger service may apply industry standard anomaly detection methods, including statistical methods (such as detection of deviation from the mean, low pass filters) and machine learning based approaches (such as clustering approaches, SVM and neural networks). For example, the controller may identify a node acting in an anomalous way such as scanning multiple other nodes and ports, or connecting to low-reputation Internet addresses.

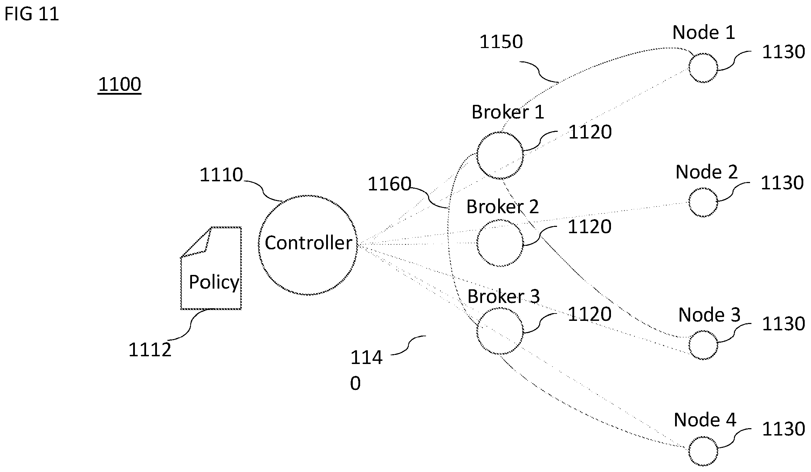

**Figure 11** is a network diagram of one example of a secure overlay network. In one example, the overlay network 1100 connects nodes indirectly via one or more proxies ("brokers") residing in a public or private cloud.

In one example, the overlay network 1100 includes a controller 1110, and a policy associated with it 1112, one or more brokers 1120, as well as one or more computing devices implementing network nodes. In one example, the controller 1110 and proxies 1120 are server computer systems, while the nodes 1130 are server computer systems, desktops or laptop computers, mobile devices such as smartphones and tablets, web browsers, or IoT devices. In some examples, controller 1110 consists of a distributed set of two or more servers.

The controller 1110, brokers 1120, and computing devices 1130 may be coupled to a network 1140 that communicates using any of the standard protocols for the secure exchange of information. In one example, one or more computing devices may be coupled with the network via a wireless connection, such as a cellular telephone connection, wireless fidelity connection, etc. The computing devices and controller may run on one Local Area Network (LAN) and may be incorporated into the same physical or logical system, or different physical or logical systems. Alternatively, the computing devices and controller may reside on different LANs, wide area networks, cellular telephone networks, etc. that may be coupled together via the Internet but separated by firewalls, routers, and/or other network devices. It should be noted that various other network configurations can be used including, for example, hosted configurations, distributed configurations, centralized configurations, etc.

In some examples, the computing devices 1130 communicate with the controller 1110 over a network connection 1140 to determine the topology of the overlay network. As per policy 1112, some or all of the nodes 1130 may be connected over a network tunnel 1150 that connects two or more computing devices 1130 through a broker 1120, whereas all communication goes to the broker in order to traverse the network between the computing devices. Such a tunnel may use standard VPN protocols such as IPSEC or PPTP, SSL/TLS, or proprietary TCP, UDP, or IP-based protocols. Any two nodes not connected via the tunnel 1150 are not considered to be on the same overlay network and are not mutually visible.

In some examples, the connectivity establishment direction is always outbound originating from the nodes 1130. Regardless of the client request direction, the tunnel is established between the brokers 1120 and the nodes 1130 always in the outbound direction to the brokers 1120. All tunneled traffic can then go in the desired direction within the established tunnel. By doing so, it is unnecessary to punch holes in any firewall to allow inbound traffic. Moreover, computing devices IP addresses do not necessarily need to be routable, as it is enough only for the brokers on the network to have access to such IP addresses.

In some examples, all communications of computing devices 1130 are encrypted, with the original payload encrypted using industry-standard encryption, such as AES-256. In some examples, encryption keys for each pair of computing devices 1130 are determined by controller 1110 and communicated to the individual nodes. In some examples, any two nodes use standard key exchange methods, such as public key encryption or Diffie Hellman. Alternatively, the system uses Identity-Based Encryption (IBE) to determine the key Kij for each nodes i and j, while the controller acts as the Private Key Generator (PKG).

In some examples, the underlying protocol for the tunnel is an IP or UDP-based protocol that provides reduced latency, overhead and allows multiplexed streams, such as Google's QUIC.

The controller 1110 may be implemented in accordance with figure 1 hereinabove as an example.

The broker 1120 may be implemented in accordance with figure 2 hereinabove as an example.

The nodes 1130 may be implemented in accordance with figure 3-6 hereinabove as an example.

**Figure 12** is a flow chart showing the interaction between the different components of the overlay network referenced in figure 11 hereinabove.

In one example, an initial connection between two nodes compromises of the following steps: a first node wishing to connect to a second node over the overlay network sends a request to the controller to connect to the second node 1202. For example, the controller may utilize its management service module to receive such connection request from the first node as shown in figure 1 hereinabove; The controller checks the identifiers of the first and second nodes against the policy and connection is only allowed if and only if the policy allows it 1204; if a connection is not allowed the controller rejects the request and no connection is established; if approved the controller then looks up the IP address associated with the second node based on the identifier sent by the first node 1206; the controller generates a cryptographically signed token for the connection 1208; the controller assigns a broker through which traffic between the first and second note will be forwarded 1210, such assignment comprising of choosing a broker from a plurality of brokers or requesting an additional broker to be initiated as elaborated hereinbelow; the controller transmits the IP address, token and broker identity to the first node 1016 and the second node 1214; the first node establishes a secure tunnel going to the broker 1220 and the second node establishes a secure tunnel going to the broker 1022; Alternatively, the first node establishes a tunnel to the broker 1020 and the broker establishes a second tunnel to the second node. The broker may utilize its network service module as shown in figure 2 hereinabove to connect the two nodes as an example.

In some examples, there are a plurality of brokers, residing in multiple POPs or on multiple public cloud providers, such as AWS, GCP, Azure and others. The location of broker 1210 through which the first and second node connect is determined by the controller based on the speed according to which the computing devices are able to communicate, as elaborated below.

In some examples, such determination is made by the controller maintaining a list of all broker IP addresses and assigning the closest broker based on the respective geo-ip distance of the first node and the broker. For example, for connecting a node in the UK to a node in California, a broker residing in AWS in the UK may be selected.

In some examples, such determination is made by directing communication to the closest broker using the standard AnyCast protocol.

In some examples, if no broker is available sufficiently close as determined by the policy or all close brokers are at their preconfigured capacity, the controller spins up additional broker instances in the desired location, utilizing standard techniques for spinning additional instances in public cloud services or VM and microservices platforms.

In some examples, such determination is made by the controller applying a predictive model based on network connection data collected periodically, including but not limited to throughput and latency data from all brokers and nodes. Prediction may use industry standard methods, such as hashing, clustering, or neural networks determine the best broker for each node based on the gathered data and such attributes as the node's geographic location, Internet service provider, type of device, and type of service and protocol.

In some examples, the controller will determine two brokers to be used, an ingress and egress brokers, by maintaining a list of periodic measurements of communication parameters amongst all nodes and brokers, such as latency and throughput. The brokers to be chosen are the two brokers minimizing the total throughput between the two nodes, the latency, or the reliability of the connection. For example, for connecting a node in the UK to a node in California, a first broker residing in AWS in the UK and a second broker in California may be selected. If a certain route has shown interruptions as logged by the controller, a different route may be selected. For example, the broker in the UK may be replaced by a broker in Ireland.

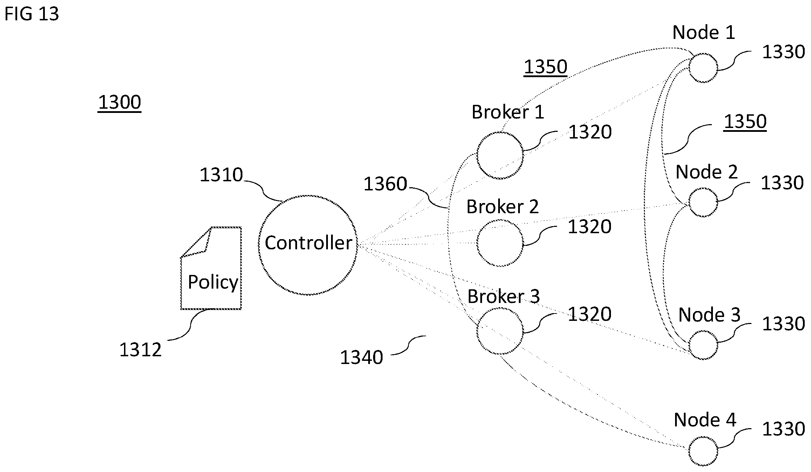

**Figure 13** is a network diagram of one example of a secure overlay network acting interchangeable as a control plane and a control and data plane.

In one example, the overlay network 1300 includes a controller 1310, and a policy associated with it 1312, one or more brokers 1320, as well as one or more computing devices implementing network nodes. In one example, the controller 1310 and proxies 1320 are server computer systems, while the nodes 1330 are server computer systems, desktops or laptop computers, mobile devices such as smartphones and tablets, web browsers, or IoT devices. In some examples, controller 1310 consists of a distributed set of two or more servers.

The controller 1310, brokers 1320, and computing devices 1330 may be coupled to a network 1340 that communicates using any of the standard protocols for the secure exchange of information. In one example, one or more computing devices may be coupled with the network via a wireless connection, such as a cellular telephone connection, wireless fidelity connection, etc. The computing devices and controller may run on one Local Area Network (LAN) and may be incorporated into the same physical or logical system, or different physical or logical systems. Alternatively, the computing devices and controller may reside on different LANs, wide area networks, cellular telephone networks, etc. that may be coupled together via the Internet but separated by firewalls, routers, and/or other network devices. It should be noted that various other network configurations can be used including, for example, hosted configurations, distributed configurations, centralized configurations, etc.

In some examples, the computing devices 1330 communicate with the controller 1310 over a network connection 1340 to determine the topology of the overlay network.

In one example, the overlay network 1300 connects one or more node pairs 1330 directly via encrypted tunnels 1350, and also connect one or more nodes indirectly via one or more brokers 1320 residing in a public or private cloud. Network topology is determined by controller 1310 per policy 1312.

In one example, the system will attempt to create direct connection between any two nodes, and will fall back to an indirect connection whereby one more brokers act as intermediaries if connection cannot be established directly, as a result of being blocked by a firewall a symmetric NAT device, having a non-routable IP address.

In some examples, routing traffic through the broker may also be performed if the policy 1312 requires traffic to be inspected en-route (e.g. scanned for viruses) or requires it to traverse a broker in order to provide anonymity, direct traffic to one or more SaaS services through white listed brokers, or terminate traffic for any other reason.

In some examples, if the policy, as may be implemented in accordance with figure 1 as an example, prescribes higher throughput or quality of service (QoS), an indirect connection will be chosen if such indirect connection achieves sufficiently higher performance.

In some examples, determining whether an indirect connection achieves superior performance is made by having the node attempt to establish a direct connection while at the same time trying one or more indirect connections and comparing the latency, throughput and other parameters.

In some examples, determining whether an indirect connection achieves superior performance is made by using a predictive model based on latency and throughput information collected from all brokers and nodes periodically.

The controller 1310 may be implemented in accordance with figure 1 hereinabove as an example.

The broker 1320 may be implemented in accordance with figure 2 hereinabove as an example.

The nodes 1330 may be implemented in accordance with figure 3-6 hereinabove as an example.

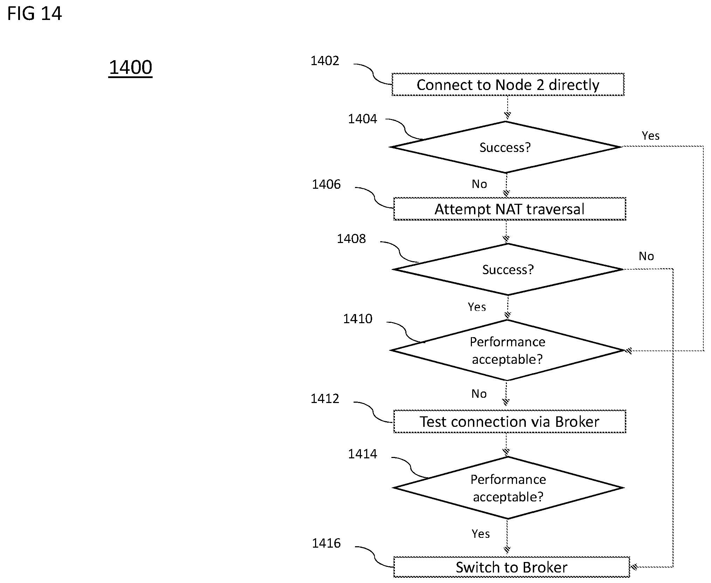

**Figure 14** is a flow chart showing the interaction between the different components of the overlay network referenced in figure 13 hereinabove.

In one example, an initial connection between two nodes compromises of the following steps: a first node requests from the controller to connect to a second node 1402 following the steps shown in figure 10 hereinabove; the node attempts to establish and connection and tests whether the connection establishment is successful 1404; if the connection failed it will attempt to perform industry standard NAT traversal, such as STUN 1406; then test the connection again 1408; if connection failed again the node will fall back to connecting via a broker 1416 following the steps shown in figure 12 hereinabove; if the initial connection succeeded 1404 or NAT traversal succeeded 1408 we continue through the flow chat; the first node tests the connection performance, including but not limited to throughput and latency and compares it with the available bandwidth and desired performance per the policy 1410. if performance exceeds the performance threshold or falls below the latency threshold as determined by the policy the direct connection is maintained; otherwise, the first node concurrently tests the connection via a broker, following the same steps to establish a connection as shown in figure 10 hereinabove; if the performance measured through the broker is adequate or sufficiently higher as determined by policy, the connection is switched to an indirect connection 1416 going through one or more brokers and the direct connection is closed.

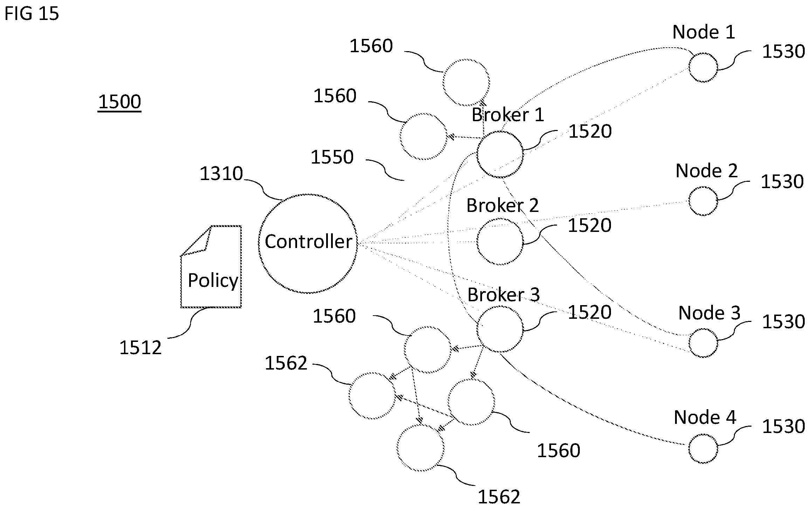

**Figure 15****:** In some examples, network traffic originating from computing devices 1530 is routed through brokers 1520 for further inspection per the policy 1512. In some examples, routing and load balancing of said network traffic is performed using a framework such as Istio. The traffic is routed to nodes 1560, which perform one type of inspection, such as running an anti-virus engine, data loss prevention, or anomaly detection. In some examples, multiple such services, 1560 and 1562 may be chained thereby having multiple scanning engines scan the traffic. The broker may utilize its chained services connector module as shown in figure 2 hereinabove to connect the two nodes as an example.

In some examples, based on the return code from services 1550 or 1562 the brokers may perform one or more of the following actions: allow the traffic to continue, block it, and log the return code. For example, if a virus has been detected, the broker may decide to block the connection and report the reason for blocking it.

The controller 1510 may be implemented in accordance with figure 1 hereinabove as an example.

The broker 1520 may be implemented in accordance with figure 2 hereinabove as an example.

The nodes 1530 may be implemented in accordance with figure 3-6 hereinabove as an example.

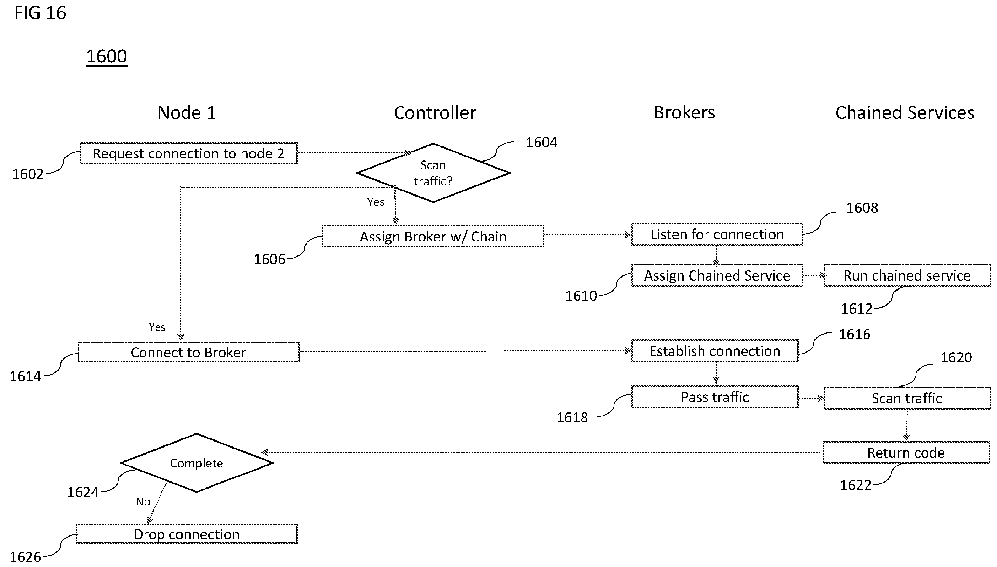

**Figure 16** is a flow chart showing the interaction between the different components of the overlay network referenced in figure 15 hereinabove.

In one example, an initial connection between two nodes compromises of the following steps: a first node requests from the controller to connect to a second node 1602; the controller checks whether the policy requests the traffic to undergo additional scanning 1604; if additional scanning is needed the controller assigns a broker 1606 following the same steps as in figure 12 hereinabove; the broker listens to incoming connections from the first node 1608; the broker assigns a chained service per the policy, such as antivirus, data loss prevention that may include services such as antivirus and data loss prevention; the chained service is run 1612 as a new instance or serverless instance, or if an applicable instance is running broker may forward traffic to it; the first node connects to the broker 1614; the broker accepts the tunneled connection 1616; the broker forwards the traffic through the chained services 1618 by utilizing industry standards such as Istio or relaying traffic over standard HTTPS or similar protocols; the chained service scan the traffic 1620; the chain service returns a code indicated success or failure 1622; the first node receives the code 1624; if failure is indicated the connection is terminated 1626.

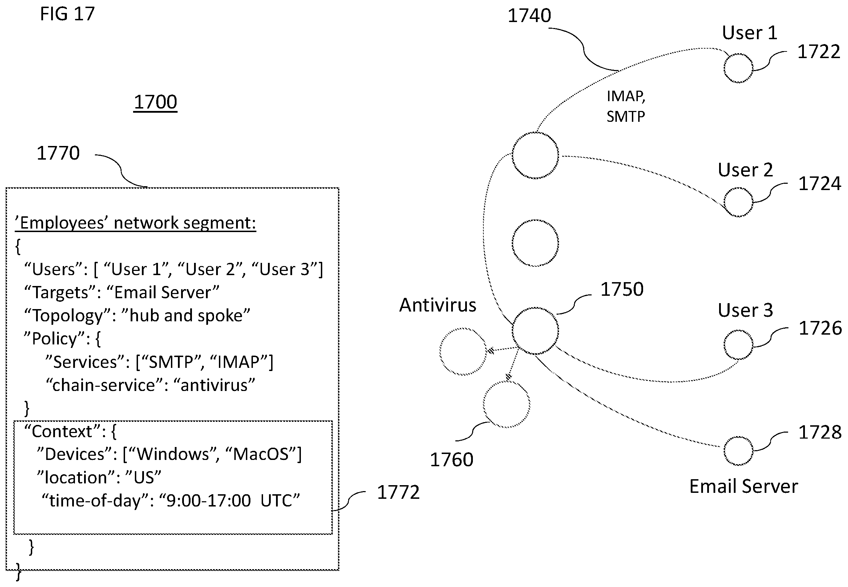

**Figure 17** shows that in some examples, the policy 1770 maintained by the controller includes a list the relationships between user identities, devices and services, along with restrictions, and actions. Restrictions and actions may include what protocols may be used on the network, or what additional services should be chained to the communication path. For example, users 1722, 1724, 1726 may communicate freely directly or over the network 1730 using SMTP and IMAP protocols, with email server 1728 for email service over network 1740 via a broker 1750. As per the policy, this traffic also goes through an anti-virus service 1760 inspection for inspection. Each node 1724 may independently enforce the policies restrictions pertaining to the allowed services and connections based the policy communicated to it from the controller. The nodes may utilize their policy enforcement module as shown in figure 3, 4 and 6 hereinabove to enforce such policy restrictions as an example. In some examples, policy rule evaluation is made according to rule priority, such as rule order. In case two rules are contradictory (for example, one rule allows all protocols and one blocks FTP) the policy enforcement traverses the rules by order of priority and the higher priority rule wins.

In some examples one or more of the above policies 1770 may be associated with a 'context' object 1772. The context may be implemented for example in accordance with figure 8 as an example. Each node can further enforce contextual access restrictions based on the policy communicated to it from the controller. The nodes may utilize their policy enforcement module as shown in figure 3, 4 and 6 hereinabove to enforce such additional restrictions as an example.

**Figure 18** is a workflow describing the initial connection of a computing device onto the overlay network.

In some examples, the first step involves a computing device attempting to connect to a second computing device over a network, whereas the network may be a local area network (LAN) or a wide area network (WAN). In some examples, a local agent or a gateway device captures said connection as may be implemented in accordance with figures 3, 5 and 6 hereinabove as an example. Since it is the first connection, the agent or gateway will require identity to be established. In some examples, this is accomplished by implementing standard SAML authentication comprising of the agent connecting to the controller 1812 requesting a connection to be established, the controller verifying the agent's certificate 1812, verification implemented by the controller's identity connector module as shown in figure 1 as an example, and if verified 1814 redirecting the agent to display a captive portal pop-up 1616, followed by the agent prompting the user for credentials 1818 through the captive portal, the agent then requesting single sign on (SSO) using industry standard SAML 1820 from an identity provider (IDP) 1822, the IDP responding 1824 and returning a token, and if authenticated 1826 requesting access to a network resource from the controller 1828, the controller further verifying the token previously obtained 1830, and if verified stores the node IP address in the database 1832 for future lookup by any node on the overlay network, and generates a second token 1834 returned to the agent, at which time the agent can use it to establish a connection 1836 as previously described in figures 10 and 12 hereinabove. In other examples, credentials may be automatically acquired from the computing device's operating system via industry standard methods such as the use of a client-side certificate, without requiring user intervention. The credentials are then sent to an identity management system (IDP) that authenticates the user 1814. Once authenticated 1816 the controller checks whether this identity is authorized per its policy 1818. If so, it allows the connection to be established 1822. In some examples, it generates a token or encryption keys 1820 that allow the computing device to communicate with the network service.

In some examples, establishing an identity of a headless node may be implemented in accordance with figure 4 hereinabove as an example, comprising of the use of a certificate residing on said node, the use of FIDO or other standard methods.

In some examples, encryption keys are randomly generated by the controller and are unique to each pair of computing devices establishing a connection.

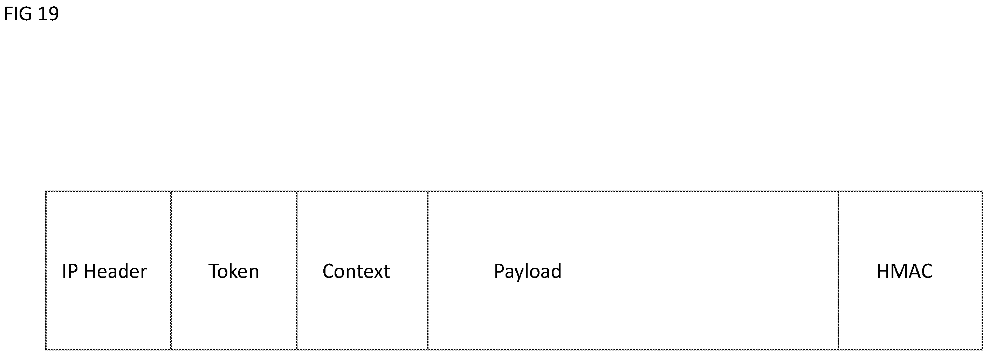

**Figure 19** shows an example of an implementation which, in some examples, features an IP-based network tunneling protocol. The protocol is preferably implemented to include frames consisting of an IP header, the sender's identity, a context (an identifier of the sender's association), the payload of the original packet, and an HMAC. This payload is encrypted. The identity and context are used in conjunction with the policy to determine whether any two nodes are allowed to connect, based on a company's policy.

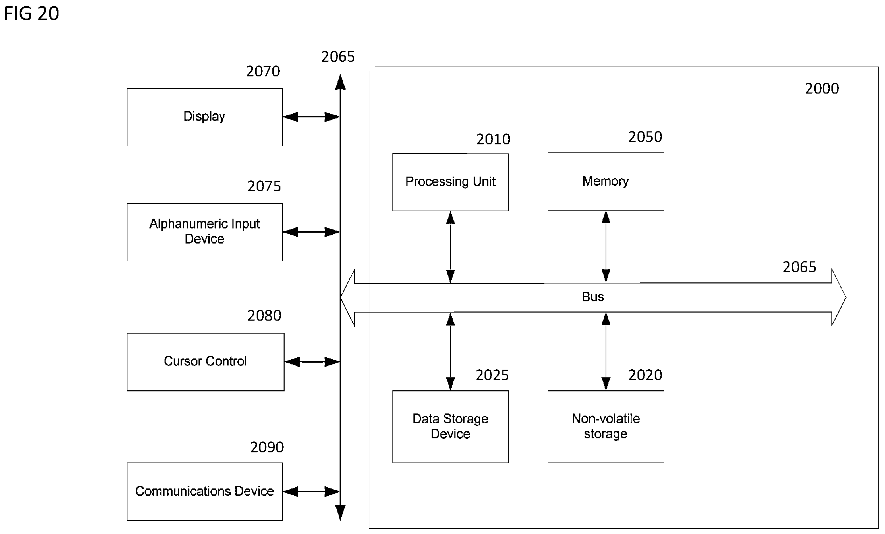

**Figure 20** is one example of a computer system on which the present system and method may be implemented. It will be apparent to those of ordinary skill in the art, however, that other alternative systems of various system architectures may also be used. Optionally such a computer system may be used with any of the edge, node, controller, broker or other computational devices. Each such computational device may comprise a plurality of such a system. The instructions for performing the various functions as described herein may for example be stored on a memory as described herein and executed by a processor as described herein.

The data processing system illustrated in Figure 20 includes a bus or other internal communication means 2065 for communicating information, and a processor 2060 coupled to the bus 2065 for processing information. The system further comprises a random access memory (RAM) or other volatile storage device 2050 (referred to as memory), coupled to bus 2065 for storing information and instructions to be executed by processor 2060. Main memory 2050 also may be used for storing temporary variables or other intermediate information during execution of instructions by processor 2060. The system also comprises a read only memory (ROM) and/or static storage device 2020 coupled to bus 2065 for storing static information and instructions for processor 2060, and a data storage device 2025 such as a magnetic disk or optical disk and its corresponding disk drive. Data storage device 2025 is coupled to bus 2065 for storing information and instructions.

The system may further be coupled to a display device 2070, such as a cathode ray tube (CRT) or a liquid crystal display (LCD) coupled to bus 2065 through bus 2065 for displaying information to a computer user. An alphanumeric input device 2075, including alphanumeric and other keys, may also be coupled to bus 2065 through bus 1865 for communicating information and command selections to processor 2060. An additional user input device is cursor control device 2080, such as a mouse, a trackball, stylus, or cursor direction keys coupled to bus 2065 through bus 2065 for communicating direction information and command selections to processor 2060, and for controlling cursor movement on display device 2070.

Another device, which may optionally be coupled to computer system 2000, is a communication device 2090 for accessing other nodes of a distributed system via a network. The communication device 2090 may include any of a number of commercially available networking peripheral devices such as those used for coupling to an Ethernet, token ring, Internet, or wide area network. The communication device 2090 may further be a null-modem connection, or any other mechanism that provides connectivity between the computer system 2000 and the outside world. Note that any or all of the components of this system illustrated in Figure 18 and associated hardware may be used in various examples.

It will be appreciated by those of ordinary skill in the art that any configuration of the system may be used for various purposes according to the particular implementation. The control logic or software can be stored in main memory 2050, mass storage device 2025, or other storage medium locally or remotely accessible to processor 2060.

It will be apparent to those of ordinary skill in the art that the system, method, and process described herein can be implemented as software stored in main memory 2050 or read only memory 2020 and executed by processor 1860. This control logic or software may also be resident on an article of manufacture comprising a computer readable medium having computer readable program code embodied therein and being readable by the mass storage device 2025 and for causing the processor 860 to operate in accordance with the methods and teachings herein.

The present system or method may also be embodied in a handheld or portable device containing a subset of the computer hardware components described above. For example, the handheld device may be configured to contain only the bus20, the processor 2060, and memory 2050 and/or 2025. The handheld device may also be configured to include a set of buttons or input signaling components with which a user may select from a set of available options. The handheld device may also be configured to include an output apparatus such as a liquid crystal display (LCD) or display element matrix for displaying information to a user of the handheld device. Conventional methods may be used to implement such a handheld device. The implementation for such a device would be apparent to one of ordinary skill in the art given the disclosure as provided herein.

The present system or method may also be embodied in a special purpose appliance including a subset of the computer hardware components described above. For example, the appliance may include a processor 2060, a data storage device 2025, a bus 2065, and memory 2050, and only rudimentary communications mechanisms, such as a small touch-screen that permits the user to communicate in a basic manner with the device. In general, the more special-purpose the device is, the fewer of the elements need be present for the device to function. In some devices, communications with the user may be through a touch-based screen, or similar mechanism.

It will be appreciated by those of ordinary skill in the art that any configuration of the system may be used for various purposes according to the particular implementation. The control logic or software can be stored on any machine-readable medium locally or remotely accessible to processor 2060. A machine-readable medium includes any mechanism for storing information in a form readable by a machine (e.g. a computer). For example, a machine readable medium includes read-only memory (ROM), random access memory (RAM), magnetic disk storage media, optical storage media, flash memory devices, etc.

In the description, numerous details are set forth. It will be apparent, however, to one of ordinary skill in the art having the benefit of this disclosure, that the present system or method may be practiced without these specific details. In some instances, well-known structures and devices are shown in block diagram form, rather than in detail, in order to avoid obscuring the description.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "receiving", "providing", "generating", "propagating", "distributing", "transmitting", or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

The present disclosure relates to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

The algorithms and displays presented herein are not inherently related to any particular computer or other apparatus. Various general purpose systems may be used with programs in accordance with the teachings herein, or it may prove convenient to construct a more specialized apparatus to perform the required method steps. The required structure for a variety of these systems will appear from the description below. In addition, the present disclosure is not described with reference to any particular programming language. It will be appreciated that a variety of programming languages may be used to implement the teachings as described herein.

## Claims

1. A method of establishing communication between nodes (930) in a system comprising a controller (910), a plurality of said nodes (930), at least one broker proxy (920), and a computer network (940) for communications between said controller (910), said at least one broker proxy (920), and said nodes (930), the method comprising:
establishing communications from a first node (930) to a second node (930) by authenticating (1822) a first user associated with the first node, and after the authentication, selecting a first policy (912) generated by the controller (910) based on a first user identifier associated with the first user, the first policy (910) specifying a first networking topology to use for the first node (930) to communicate with the second node (930); and
establishing communications from a third node (1130) to a fourth node (1130) by authenticating (1822) a second user associated with the third node, and after the authentication, selecting a second policy (1112) generated by the controller (1110) based on a second user identifier associated with the second user, the second policy (1112) specifying a second networking topology to use for the third node (1130) to communicate with the fourth node (1130); and
wherein the first networking topology requires a first tunnel (950) to be established between the first node (930) and the second node (930) in order to define a direct connection between the first and second nodes (930) that does not traverse an intervening broker proxy (920);
wherein the second networking topology requires the third and fourth nodes (1130) to establish connections with a broker proxy (1120) to relay communications between the third and fourth nodes (1130).

2. The method of claim 1, wherein each node (930) comprises a policy enforcement module (304), wherein:
i) communications from the first node (930) to the third node (1130) are blocked according to a third policy (912) enforced by a first policy enforcement module (304) of the first node (930), and
ii) communications from the second node (930) to the fourth node (1130) are blocked according to the fourth policy (1112) by a second policy enforcement module (304) of the second node (1130).

3. The method of claim 1, wherein said first tunnel (950) implements an encryption protocol, and wherein said first node (930) communicates with said second node (930) over said first tunnel (950) based on keys or tokens compatible with said encryption protocol that are distributed by the controller (910).

4. The method of claim 1, wherein the first tunnel (950) is an overlay network tunnel and the first and second nodes (930) communicate with each other because the first and second nodes (930) reside on the same overlay network.

5. The method of claim 1, wherein said first tunnel (950) is transient and is established when the first node (930) initiates authorized communication with the second node (930).

6. The method of claim 1, wherein the broker proxy (920) forwards communications from the third node (1130) to a SaaS service before forwarding the communications to the fourth node (1130).

7. The method of claim 1, wherein the broker proxy (1120) forwards traffic from the third node (1130) to one or more chained services (1560, 1562), and then forwards the traffic to the fourth node (1130).

8. The method of claim 1, wherein the second network topology requires the third and fourth nodes (1130) to establish connections with the broker proxy (1120) according to at least one of a traffic quality requirement, a bandwidth requirement, a network routing requirement or a security requirement.

9. The method of claim 1, wherein when a fifth (1330) attempts to connect to a sixth node (1330) and said connection fails, said fifth node (1330) attempts to perform NAT traversal; if said NAT traversal fails, the controller (1310) assigns one or more broker proxies (1320) to circumvent connection state that does not permit direct routing.

10. The method of claim 9, wherein the controller (1310) selects the location of one or more broker proxies (1320) as to optimize one or more of network throughput, latency or traffic quality.

11. The method of claim 9, wherein the controller (1310) selects at least one broker proxy (1320) that is closest to the fifth node (1330).

12. The method of claim 4, wherein authenticating the first user comprises:
preventing all outbound traffic going to the overlay network from the first node (930);
displaying a captive portal to receive user credentials;
sending the user credentials to an identity provider system for authentication.

13. The method of claim 1, wherein the third and fourth nodes (1130) establishing connections with the broker proxy (1120) comprises establishing a second tunnel (1150) between the third and fourth nodes (1130) through the broker proxy (1120).

14. The method of claim 1, wherein the first node (930) is a gateway node, and the third node (1130) is an end user computer.

15. A system comprising a controller (910), a plurality of nodes (930), at least one broker proxy (920), and a computer network (940) for communications between said controller (910), said at least one broker proxy (920), and said nodes (930), wherein:
a first node (930) is configured to communicate with a second node (930) by authenticating a first user associated with the first node, and after the authentication, selecting a first policy (912) generated by the controller (910) based on a first user identifier associated with the first user, the first policy (910) specifying a first networking topology to use for the first node (930) to communicate with the second node (930); and
a third node (1130) is configured to communicate with a fourth node (1130) by authenticating a second user associated with the third node, and after the authentication, selecting a second policy (1112) generated by the controller (1110) based on a second user identifier associated with the second user, the second policy (1112) specifying a second networking topology to use for the third node (1130) to communicate with the fourth node (1130); and
wherein the first networking topology requires a first tunnel (950) to be established between the first node (930) and the second node (930) in order to define a direct connection between the first and second nodes (930) that does not traverse an intervening broker proxy (920);
wherein the second networking topology requires the third and fourth nodes (1130) to establish connections with a broker proxy (1120) to relay communications between the third and fourth nodes (1130).

## Patentansprüche

1. Ein Verfahren zum Herstellen einer Kommunikation zwischen Knoten (930) in einem System, das einen Controller (910), eine Mehrzahl der Knoten (930), mindestens einen Broker-Proxy (920) und ein Computernetzwerk (940) für Kommunikationen zwischen dem Controller (910), dem mindestens einen Broker-Proxy (920) und den Knoten (930) aufweist, wobei das Verfahren aufweist:
Herstellen von Kommunikationen von einem ersten Knoten (930) zu einem zweiten Knoten (930) durch Authentifizieren (1822) eines ersten Benutzers, der mit dem ersten Knoten assoziiert ist, und nach der Authentifizierung, Auswählen einer ersten Richtlinie (912), die durch den Controller (910) erzeugt wird, basierend auf einem ersten Benutzeridentifizierer, der mit dem ersten Benutzer assoziiert ist, wobei die erste Richtlinie (910) eine erste Netzwerktopologie spezifiziert, die für den ersten Knoten (930) zu verwenden ist, um mit dem zweiten Knoten (930) zu kommunizieren; und
Herstellen von Kommunikationen von einem dritten Knoten (1130) zu einem vierten Knoten (1130) durch Authentifizieren (1822) eines zweiten Benutzers, der mit dem dritten Knoten assoziiert ist, und nach der Authentifizierung, Auswählen einer zweiten Richtlinie (1112), die durch den Controller (1110) erzeugt wird, basierend auf einem zweiten Benutzeridentifizierer, der mit dem zweiten Benutzer assoziiert ist, wobei die zweite Richtlinie (1112) eine zweite Netzwerktopologie spezifiziert, die für den dritten Knoten (1130) zu verwenden ist, um mit dem vierten Knoten (1130) zu kommunizieren; und
wobei die erste Netzwerktopologie erfordert, dass ein erster Tunnel (950) zwischen dem ersten Knoten (930) und dem zweiten Knoten (930) hergestellt wird, um eine direkte Verbindung zwischen dem ersten und dem zweiten Knoten (930) zu definieren, die einen intervenierenden Broker-Proxy (920) nicht durchquert;
wobei die zweite Netzwerktopologie erfordert, dass der dritte und der vierte Knoten (1130) Verbindungen mit einem Broker-Proxy (1120) herstellen, um Kommunikationen zwischen dem dritten und dem vierten Knoten (1130) weiterzuleiten.

2. Das Verfahren gemäß Anspruch 1, wobei jeder Knoten (930) ein Richtliniendurchsetzungsmodul (304) aufweist, wobei:
i) Kommunikationen von dem ersten Knoten (930) zu dem dritten Knoten (1130) gemäß einer dritten Richtlinie (912) blockiert werden, die durch ein erstes Richtliniendurchsetzungsmodul (304) des ersten Knotens (930) durchgesetzt wird, und
ii) Kommunikationen von dem zweiten Knoten (930) zu dem vierten Knoten (1130) gemäß der vierten Richtlinie (1112) durch ein zweites Richtliniendurchsetzungsmodul (304) des zweiten Knotens (1130) blockiert werden.

3. Das Verfahren gemäß Anspruch 1, wobei der erste Tunnel (950) ein Verschlüsselungsprotokoll implementiert, und wobei der erste Knoten (930) mit dem zweiten Knoten (930) über den ersten Tunnel (950) basierend auf Schlüsseln oder Token kommuniziert, die mit dem Verschlüsselungsprotokoll kompatibel sind, die durch den Controller (910) verteilt werden.

4. Das Verfahren gemäß Anspruch 1, wobei der erste Tunnel (950) ein Overlay-Netzwerktunnel ist und der erste und der zweite Knoten (930) miteinander kommunizieren, weil sich der erste und der zweite Knoten (930) auf demselben Overlay-Netzwerk befinden.

5. Das Verfahren gemäß Anspruch 1, wobei der erste Tunnel (950) vorübergehend ist und hergestellt wird, wenn der erste Knoten (930) eine autorisierte Kommunikation mit dem zweiten Knoten (930) initiiert.

6. Das Verfahren gemäß Anspruch 1, wobei der Broker-Proxy (920) Kommunikationen von dem dritten Knoten (1130) an einen SaaS-Dienst weiterleitet, bevor er die Kommunikationen an den vierten Knoten (1130) weiterleitet.

7. Das Verfahren gemäß Anspruch 1, wobei der Broker-Proxy (1120) Verkehr von dem dritten Knoten (1130) an einen oder mehrere verkettete Dienste (1560, 1562) weiterleitet und dann den Verkehr an den vierten Knoten (1130) weiterleitet.

8. Das Verfahren gemäß Anspruch 1, wobei die zweite Netzwerktopologie erfordert, dass der dritte und der vierte Knoten (1130) Verbindungen mit dem Broker-Proxy (1120) gemäß mindestens einem von einer Verkehrsqualitätsanforderung, einer Bandbreitenanforderung, einer Netzwerkroutinganforderung oder einer Sicherheitsanforderung herstellen.

9. Das Verfahren gemäß Anspruch 1, wobei, wenn ein fünfter Knoten (1330) versucht, sich mit einem sechsten Knoten (1330) zu verbinden, und die Verbindung fehlschlägt, der fünfte Knoten (1330) versucht, eine NAT-Durchquerung durchzuführen; wenn die NAT-Durchquerung fehlschlägt, weist der Controller (1310) einen oder mehrere Broker-Proxys (1320) zu, um einen Verbindungszustand zu umgehen, der kein direktes Routen zulässt.

10. Das Verfahren gemäß Anspruch 9, wobei der Controller (1310) den Ort von einem oder mehreren Broker-Proxys (1320) auswählt, um eines oder mehrere von Netzwerkdurchsatz, Latenz oder Verkehrsqualität zu optimieren.

11. Das Verfahren gemäß Anspruch 9, wobei der Controller (1310) mindestens einen Broker-Proxy (1320) auswählt, der dem fünften Knoten (1330) am nächsten ist.

12. Das Verfahren gemäß Anspruch 4, wobei das Authentifizieren des ersten Benutzers aufweist:
Verhindern, dass aller ausgehender Verkehr von dem ersten Knoten (930) zu dem Overlay-Netzwerk geht;
Anzeigen eines Captive-Portals, um Benutzerzugangsdaten zu empfangen;
Senden der Benutzerzugangsdaten an ein Identitäts-Providersystem zur Authentifizierung.

13. Das Verfahren gemäß Anspruch 1, wobei das Herstellen von Verbindungen mit dem Broker-Proxy (1120) durch den dritten und den vierten Knoten (1130) das Herstellen eines zweiten Tunnels (1150) zwischen dem dritten und dem vierten Knoten (1130) durch den Broker-Proxy (1120) aufweist.

14. Das Verfahren gemäß Anspruch 1, wobei der erste Knoten (930) ein Gateway-Knoten ist und der dritte Knoten (1130) ein Endbenutzer-Computer ist.

15. Ein System, das einen Controller (910), eine Mehrzahl von Knoten (930), mindestens einen Broker-Proxy (920) und ein Computernetzwerk (940) für Kommunikationen zwischen dem Controller (910), dem mindestens einen Broker-Proxy (920) und den Knoten (930) aufweist, wobei:
ein erster Knoten (930) konfiguriert ist zum Kommunizieren mit einem zweiten Knoten (930) durch Authentifizieren eines ersten Benutzers, der mit dem ersten Knoten assoziiert ist, und nach der Authentifizierung, Auswählen einer ersten Richtlinie (912), die durch den Controller (910) erzeugt wird, basierend auf einem ersten Benutzeridentifizierer, der mit dem ersten Benutzer assoziiert ist, wobei die erste Richtlinie (910) eine erste Netzwerktopologie spezifiziert, die für den ersten Knoten (930) zu verwenden ist, um mit dem zweiten Knoten (930) zu kommunizieren; und
ein dritter Knoten (1130) konfiguriert ist zum Kommunizieren mit einem vierten Knoten (1130) durch Authentifizieren eines zweiten Benutzers, der mit dem dritten Knoten assoziiert ist, und nach der Authentifizierung, Auswählen einer zweiten Richtlinie (1112), die durch den Controller (1110) erzeugt wird, basierend auf einem zweiten Benutzeridentifizierer, der mit dem zweiten Benutzer assoziiert ist, wobei die zweite Richtlinie (1112) eine zweite Netzwerktopologie spezifiziert, die für den dritten Knoten (1130) zu verwenden ist, um mit dem vierten Knoten (1130) zu kommunizieren; und
wobei die erste Netzwerktopologie erfordert, dass ein erster Tunnel (950) zwischen dem ersten Knoten (930) und dem zweiten Knoten (930) hergestellt wird, um eine direkte Verbindung zwischen dem ersten und dem zweiten Knoten (930) zu definieren, die einen intervenierenden Broker-Proxy (920) nicht durchquert;
wobei die zweite Netzwerktopologie erfordert, dass der dritte und der vierte Knoten (1130) Verbindungen mit einem Broker-Proxy (1120) herstellen, um Kommunikationen zwischen dem dritten und dem vierten Knoten (1130) weiterzuleiten.

## Revendications

1. Procédé d'établissement de communication entre des nœuds (930) dans un système comprenant un dispositif de commande (910), une pluralité desdits nœuds (930), au moins un proxy de courtage (920), et un réseau informatique (940) pour des communications entre ledit dispositif de commande (910), ledit proxy de courtage (920), et lesdits nœuds (930), le procédé comprenant les étapes consistant à :
établir des communications d'un premier nœud (930) à un deuxième nœud (930) en authentifiant (1822) un premier utilisateur associé au premier nœud, et après l'authentification, sélectionner une première politique (912) générée par le dispositif de commande (910) sur la base d'un premier identifiant d'utilisateur associé au premier utilisateur, la première politique (910) spécifiant une première topologie de mise en réseau à utiliser pour que le premier nœud (930) communique avec le deuxième nœud (930) ; et
établir des communications d'un troisième nœud (1130) à un quatrième nœud (1130) en authentifiant (1822) un second utilisateur associé au troisième nœud, et après l'authentification, sélectionner une deuxième politique (1112) générée par le dispositif de commande (1110) sur la base d'un seconde identifiant d'utilisateur associé au second utilisateur, la deuxième politique (1112) spécifiant une seconde topologie de mise en réseau à utiliser pour que le troisième nœud (1130) communique avec le quatrième nœud (1130) ; et
dans lequel la première topologie de mise en réseau nécessite qu'un premier tunnel (950) soit établi entre le premier nœud (930) et le deuxième nœud (930) afin de définir une connexion directe entre les premier et deuxième nœuds (930) qui ne traverse pas un proxy de courtage intermédiaire (920) ;
dans lequel la seconde topologie de mise en réseau nécessite que les troisième et quatrième nœuds (1130) établissent des connexions avec un proxy de courtage (1120) afin de relayer des communications entre les troisième et quatrième nœuds (1130).

2. Procédé selon la revendication 1, dans lequel chaque nœud (930) comprend un module d'application de politique (304), dans lequel :
i) des communications du premier nœud (930) vers le troisième nœud (1130) sont bloquées conformément à une troisième politique (912) appliquée par un premier module d'application de politique (304) du premier nœud (930), et
ii) des communications du deuxième nœud (930) au quatrième nœud (1130) sont bloquées conformément à la quatrième politique (1112) par un second module d'application de politique (304) du deuxième nœud (1130).

3. Procédé selon la revendication 1, dans lequel ledit premier tunnel (950) met en œuvre un protocole de cryptage, et dans lequel ledit premier nœud (930) communique avec ledit deuxième nœud (930) sur ledit premier tunnel (950) sur la base de clés ou de jetons compatibles avec ledit protocole de cryptage qui sont distribués par le dispositif de commande (910).

4. Procédé selon la revendication 1, dans lequel le premier tunnel (950) est un tunnel de réseau superposé et les premier et deuxième nœuds (930) communiquent entre eux du fait que les premier et deuxième nœuds (930) résident sur le même réseau superposé.

5. Procédé selon la revendication 1, dans lequel ledit premier tunnel (950) est transitoire et est établi lorsque le premier nœud (930) initie une communication autorisée avec le deuxième nœud (930).

6. Procédé selon la revendication 1, dans lequel le proxy de courtage (920) transmet des communications du troisième nœud (1130) à un service SaaS avant de transmettre les communications au quatrième nœud (1130).

7. Procédé selon la revendication 1, dans lequel le proxy de courtage (1120) transmet le trafic du troisième nœud (1130) à un ou plusieurs services chaînés (1560, 1562), puis transmet le trafic au quatrième nœud (1130).

8. Procédé selon la revendication 1, dans lequel la seconde topologie de mise en réseau nécessite que les troisième et quatrième nœuds (1130) établissent des connexions avec le proxy de courtage (1120) selon au moins une exigence parmi une exigence de qualité de trafic, une exigence de bande passante, une exigence de routage de réseau ou une exigence de sécurité.

9. Procédé selon la revendication 1, dans lequel lorsqu'un cinquième nœud (1330) tente de se connecter à un sixième nœud (1330) et ladite connexion échoue, ledit cinquième nœud (1330) tente d'effectuer une traversée NAT ; si ladite traversée NAT échoue, le dispositif de commande (1310) attribue un ou plusieurs proxys de courtage (1320) pour contourner l'état de connexion qui ne permet pas un routage direct.

10. Procédé selon la revendication 9, dans lequel le dispositif de commande (1310) sélectionne l'emplacement d'un ou plusieurs proxys de courtage (1320) afin d'optimiser un ou plusieurs parmi un débit de réseau, une latence ou une qualité de trafic.

11. Procédé selon la revendication 9, dans lequel le dispositif de commande (1310) sélectionne au moins un proxy de courtage (1320) qui est le plus proche du cinquième nœud (1330).

12. Procédé selon la revendication 4, dans lequel l'authentification du premier utilisateur comprend les étapes consistant à :
empêcher tout trafic sortant d'aller vers le réseau superposé à partir du premier nœud (930) ;
afficher un portail captif pour recevoir des justificatifs d'identité d'utilisateur ;
envoyer les justificatifs d'identité d'utilisateur à un système de fournisseur d'identité pour authentification.

13. Procédé selon la revendication 1, dans lequel les troisième et quatrième nœuds (1130) établissant des connexions avec le proxy de courtage (1120) comprennent l'établissement d'un second tunnel (1150) entre les troisième et quatrième nœuds (1130) via le proxy de courtage (1120).

14. Procédé selon la revendication 1, dans lequel le premier nœud (930) est un nœud de passerelle, et le troisième nœud (1130) est un ordinateur d'utilisateur final.

15. Système comprenant un dispositif de commande (910), une pluralité de nœuds (930), au moins un proxy de courtage (920) et un réseau informatique (940) pour des communications entre ledit dispositif de commande (910), ledit proxy de courtage (920) et lesdits nœuds (930), dans lequel :
un premier nœud (930) est configuré pour communiquer avec un deuxième nœud (930) en authentifiant un premier utilisateur associé au premier nœud, et après l'authentification, en sélectionnant une première politique (912) générée par le dispositif de commande (910) sur la base d'un premier identifiant d'utilisateur associé au premier utilisateur, la première politique (910) spécifiant une première topologie de mise en réseau à utiliser pour que le premier nœud (930) communique avec le deuxième nœud (930) ; et
un troisième nœud (1130) est configuré pour communiquer avec un quatrième nœud (1130) en authentifiant un second utilisateur associé au troisième nœud, et après l'authentification, en sélectionnant une deuxième politique (1112) générée par le dispositif de commande (1110) sur la base d'un second identifiant d'utilisateur associé au second utilisateur, la deuxième politique (1112) spécifiant une seconde topologie de mise en réseau à utiliser pour que le troisième nœud (1130) communique avec le quatrième nœud (1130) ; et
dans lequel la première topologie de mise en réseau nécessite qu'un premier tunnel (950) soit établi entre le premier nœud (930) et le deuxième nœud (930) afin de définir une connexion directe entre les premier et deuxième nœuds (930) qui ne traverse pas un proxy de courtage intermédiaire (920) ;
dans lequel la seconde topologie de mise en réseau nécessite que les troisième et quatrième nœuds (1130) établissent des connexions avec un proxy de courtage (1120) afin de relayer des communications entre les troisième et quatrième nœuds (1130).
